# EUROPÄISCHE PATENTSCHRIFT

(11) **EP 0 364 562 B1**
(45) Veröffentlichungstag und Bekanntmachung des Hinweises auf die Patenterteilung: **29.12.1993**
(21) Anmeldenummer: 89904521.5
(22) Anmeldetag: 15.04.1989
(51) Int. Cl.: G05D 23/13, E03C 1/04

(54) **ELEKTRONISCH GESTEUERTE TEMPERATUR- UND DURCHFLUSSMISCHVORRICHTUNG FÜR FLÜSSIGE MEDIEN, INSBESONDERE FÜR DEN SANITÄRBEREICH**
ELECTRONICALLY CONTROLLED TEMPERATURE AND FLOW MIXING DEVICE FOR LIQUID MEDIA, IN PARTICULAR FOR SANITARY INSTALLATIONS
DISPOSITIF MELANGEUR A COMMANDE ELECTRONIQUE DE LA TEMPERATURE ET DE L'ECOULEMENT DE SUBSTANCES LIQUIDES, NOTAMMENT DANS LE DOMAINE SANITAIRE

(30) Priorität: 16.04.1988 DE 3812736
(43) Veröffentlichungstag der Anmeldung: 25.04.1990
(73) Patentinhaber: DRIES, Armin, 63110 Rodgau (DE); WEGENER, Susanne, 63110 Rodgau (DE)
(72) Erfinder: DRIES, Armin, 63110 Rodgau (DE); WEGENER, Susanne, 63110 Rodgau (DE)
(74) Vertreter: Oppermann, Ewald, Dipl.-Ing.
(86) Internationale Anmeldenummer: DE8900231
(87) Internationale Veröffentlichungsnummer: WO8909956

(56) Entgegenhaltungen:
- EP-A- 0 129 894
- EP-A- 0 195 271
- DE-A- 3 514 640
- FR-A- 2 535 363
- FR-A- 2 562 687
- US-A- 4 387 127

## Beschreibung

Die Erfindung betrifft eine elektronisch gesteuerte Temperatur- und Durchflußmischvorrichtung für flüssige Medien, insbesondere für den Sanitärbereich, bestehend aus einem Tastenfeld mit manuell betätigbaren Kontaktpunkten, Zuläufen und einem Abfluß für das Medium, Ventilen zum Steuern der Medientemperatur und des Medienflusses und einer Steuervorrichtung, die entsprechend den Eingaben des Tastenfeldes die Ventile ansteuert.

Aus der DE-OS 33 38 064 ist eine Wasserausgabevorrichtung mit einem Tastenfeld bekannt. Das Tastenfeld ist matrixförmig angeordnet und besteht aus einzelnen Eingabetasten. Hierbei sind eine Reihe Tasten zum Bestimmen der Wassertemperatur und eine Reihe Tasten zum Bestimmen der Durchflußmenge vorgesehen.

Nachteilig bei der bekannten Wasserausgabevorrichtung ist, daß sich Änderungen in der Temperatur und Durchflußmenge nur verhältnismäßig langsam durchführen lassen. Bis zum Erreichen der gewünschten Temperatur bzw. Durchflußmenge werden große Wassermengen ungenutzt abgegeben. Ein schnelles Ändern der Temperatur und Durchflußmenge ist nicht möglich.

Weiter ist aus der DE-OS 35 14 640 eine Temperatur- und Durchflußmischvorrichtung bekannt, die berührungslos arbeitet. Die Temperatur und der Durchfluß wird durch die Position der Hände einer Person innerhalb eines Abfragebereiches bestimmt. Der Abfragebereich wird durch Sender und Empfänger aufgebaut, die in der Nähe des Ausflusses der bekannten Temperatur- und Durchflußmischvorrichtung angeordnet sind.

Zwar lassen sich die Temperatur und der Durchfluß gegenüber der DE-OS 33 38 064 wesentlich schneller einstellen, jedoch ist die Betriebssicherheit nicht auf Dauer gewährleistet. So werden die Sender und Empfänger häufig mit Wasser benetzt, was zu Kalkablagerungen führt. Die Kalkablagerungen können den Reflexbetrieb zwischen den Sendern, den Händen einer Person und den Empfänger stören. Der Betrieb der bekannten Vorrichtung kann selbst durch den Wasserfluß aus dem Ausfluß, der im Abfragebereich liegt, gestört werden. Um eine konstante Temperatur oder einen konstanten Durchflußwert aufrecht zu erhalten, müssen die Hände in einer bestimmten Position beibehalten werden, was bei den typischen Händewaschbewegungen schwierig, wenn nicht sogar unmöglich ist.

Es ist deshalb Aufgabe der Erfindung eine elektronisch gesteuerte Temperatur- und Durchflußmischvorrichtung für flüssige Medien, insbesondere für den Sanitärbereich zu schaffen, die schnell auf die gewünschte Temperatur und Durchflußmenge des Mediums einstellbar und die betriebssicher ist.

Diese Aufgabe wird durch die Merkmale des kennzeichnenden Teils des Patentanspruchs 1 gelöst.

Nach der Erfindung weist das Tastenfeld zusätzlich ein Anzeigefeld auf. Vorzugsweise ist für jeden manuell betätigbaren Kontaktpunkt des Tastenfeldes ein Anzeigepunkt vorgesehen. Zusammengehörige Kontakt- und Anzeigepunkte sind gleichfalls in denselben Bereich des Tastenfeldes angeordnet. Folglich wird dem Benutzer signalisiert, welcher Kontaktpunkt betätigt wurde.

Neben der räumlichen Anordnung jeweils eines Anzeigepunktes im Bereich eines jeden manuell betätigbaren Kontaktpunktes sind die Kontaktpunkte erfindungsgemäß so verschaltet, daß das Ansteuern der Ventile für Temperatur und Durchfluß gleichzeitig erfolgt. Folglich ist jedem manuell betätigbaren Kontaktpunkt eine bestimmte Temperatur und eine bestimmte Durchflußmenge zugeordnet und es lassen sich zeilen- oder matrixförmige Tastenkennfelder für die verschiedenen Betriebspunkte von Temperatur und Durchfluß aufbauen.

Gemäß der Erfindung sind alle drei Kennfelder für Anzeige, Temperatur und Durchfluß in einem Tastenfeld zusammengefaßt. Erst das vorteilhafte Zusammenlegen von Temperatur- und Durchflußbetriebspunkten auf einem gemeinsamen Kontaktpunkt ermöglicht den Aufbau von Temperatur/Durchfluß-Kennfeldern. Durch das zusätzliche Überlagern des Anzeigenkennfeldes ergibt sich im Zusammenwirken aller drei Kennfelder die schnelle Einstellbarkeit der Mischvorrichtung. Ein Benutzer muß sich nicht mehr merken, welche Taste er zuletzt betätigt hat, und das Einstellen von gewünschten Temperatur- und Durchflußbetriebspunkten kann mit einem einzigen Tastendruck erfolgen. Mittels der Erfindung ist das Einstellen und Ändern der Betriebspunkte in kürzester Zeit durchführbar. Die Anzeige verhindert unnötige Fehleingaben.

Durch das manuell betätigbare Tastenfeld sind Bedieneingaben sicher von Umgebungseinflüssen wie Wasserspritzern, Kalkablagerungen, Temperaturänderungen etc. unterscheidbar. Ein sicherer Betrieb ist auf lange Sicht gewährleistet.

Nach einer Weiterbildung der Erfindung ist eine Detektiervorrichtung vorgesehen, die die Eingabe von mehreren Tastenbetätigungen auswertet und den Mittelwert für das Mischungsverhältnis und den Durchfluß des Mediums bestimmt. Nach der Weiterbildung der erfindungsgemäßen Mischvorrichtung sind so gleichfalls Zwischenwerte innerhalb des Kennfeldes aus Temperatur- und Durchflußbetriebspunkten erzielbar.

Vorteilhafte Weiterbildungen der Erfindung sind den anderen Unteransprüchen zu entnehmen.

Nachfolgend wird die Erfindung anhand der Zeichnungen näher beschrieben. Es zeigen:
- Fig. 1: einen Wasserhahn für ein Waschbecken mit einem Tastenfeld nach der Erfindung;
- Fig. 2: eine Draufsicht auf ein Tastenfeld nach der Erfindung;
- Fig. 3: eine Draufsicht auf ein weiteres Tastenfeld nach der Erfindung;
- Fig. 4: eine schematische Darstellung des Tastenfeldes nach der Erfindung;
- Fig. 4A: eine Kurvendarstellung, die beispielhaft die Änderung des Durchflusses bei einer Reihenänderung zeigt;
- Fig. 4B: eine Kurvendarstellung, die beispielhaft die Änderung des Warmwasseranteils von groß auf klein bei einem Spaltensprung von links nach rechts in dem Tastenfeld zeigt;
- Fig. 4C: eine Kurvendarstellung, die beispielhaft die Änderung des Kaltwasseranteils von klein auf groß bei einem Spaltensprung von links nach rechts in dem Tastenfeld zeigt;
- Fig. 5: eine perspektivische Ansicht eines Tastenfeldes nach der Erfindung mit einer Stoptaste;
- Fig. 6: eine perspektivische Ansicht eines Tastenfeldes nach der Erfindung mit einer Stoptaste und einem Anzeigenfeld;
- Fig. 7: eine Anordnung der Mischvorrichtung für eine Badewanne;
- Fig. 8: eine Anordnung der Mischvorrichtung für eine Dusche;
- Fig. 9: ein Ausführungsbeispiel der Ansteuerung und des Durchflußplanes für das flüssige Medium und
- Fig. 10: ein weiteres Ausführungsbeispiel der Ansteuerung und des Durchflußplanes für das flüssige Medium.

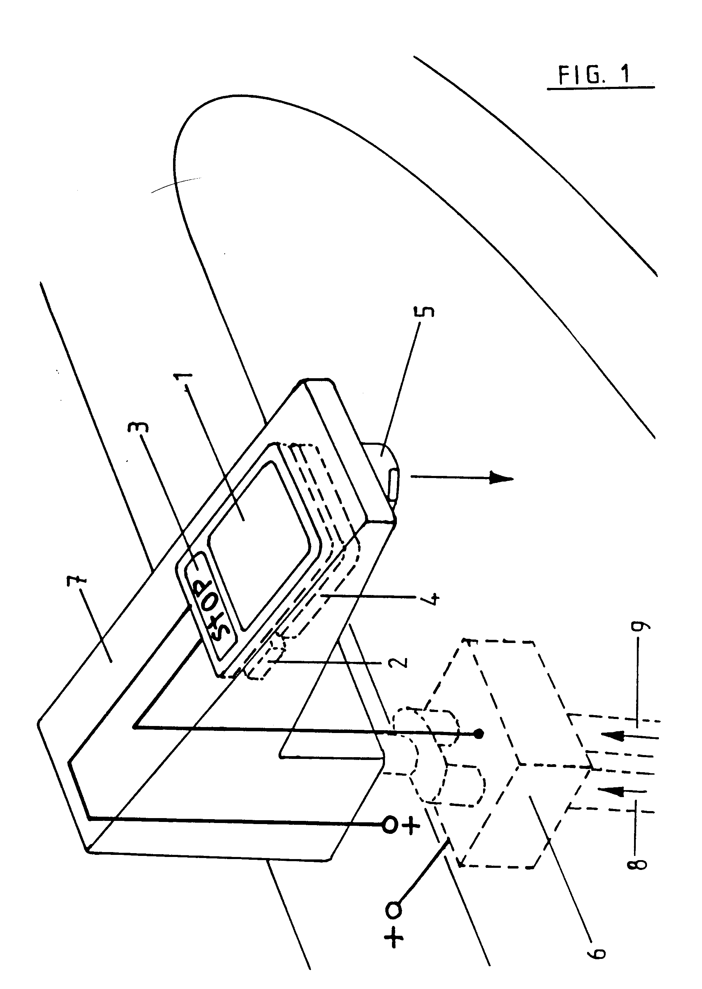

Fig. 1 zeigt eine Mischarmatur 7 in Form eines Wasserhahns für ein Waschbecken mit einem Tastenfeld 1. Das Tastenfeld 1 ist zusammen mit einer Stoptaste 3 an der Oberseite des Wasserhahns ausgebildet und somit zur Betätigung leicht zugänglich. Unterhalb des Tastenfeldes 1 ist deckungsgleich ein Anzeigenfeld 4 (gestrichelt dargestellt) angeordnet. Desweiteren ist eine elektronische Steuervorrichtung 2 unterhalb des Tastenfeldes 1 und der Stoptaste 3 in dem Wasserhahn angeordnet. Die soweit beschriebene Einheit aus dem Tastenfeld 1, der Steuervorrichtung 2, der Stoptaste 3 und dem Anzeigenfeld 4 ist über eine Steuerleitung mit einer Ventilmischvorrichtung 6 verbunden, in der Ventile zur Steuerung der Kaltwasserzufuhr 8 und der Warmwasserzufuhr 9 ausgebildet sind. Das in der Mischvorrichtung 6 entsprechend der Eingabe an dem Tastenfeld 1 auf bestimmte Betriebsparameter eingestellte Wasser wird über eine nichtgezeigte Rohrverbindung zu einem Ausfluß 5 geleitet. Die Stromversorgung der soweit beschriebenen elektronischen Baugruppen erfolgt in bekannter Weise über Stromversorgungsleitungen.

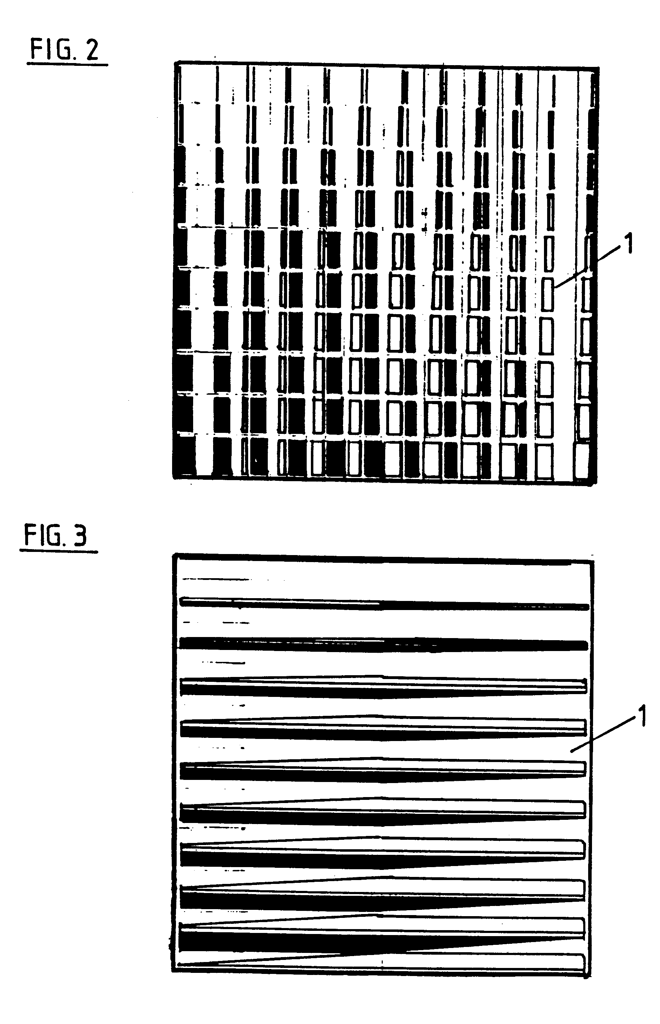

Fig. 2 zeigt eine graphische Darstellung der Oberseite des Tastenfeldes 1. Die einzelnen Kontaktpunkte des Tastenfeldes 1 sind in einer Matrix angeordnet und bilden Reihen und Spalten.

Die Kreuzungs- oder Gitterpunkte der Matrix bilden die Kontaktpunkte. In jedem Kreuzungspunkt der Reihen und Spalten sind zwei zusammengehörige rechteckige Symbole dargestellt, welche die Durchflußmenge und die Mischungsanteile des aus dem Ausfluß 5 (Fig. 1) austretenden Wassers kennzeichnet. Die geschwärzten Rechtecke symbolisieren beispielsweise den Warmwasseranteil und die nichtgeschwärzten Rechtecke den Kaltwasseranteil. So zeigt die linke Spalte nur Warmwasser und die rechte Spalte nur Kaltwasser. Mit zunehmendem Übergang von der linken Spalte zur rechten Spalte bleibt der Warmwasseranteil zunächst konstant und nimmt dann zunehmend ab. Bei Betrachtung der Spalten von rechts nach links bleibt der Kaltwasseranteil zunächst konstant und nimmt dann zunehmend ab. Die Kontaktreihe, die den größten Durchfluß kennzeichnet, bildet in dem Ausführungsbeispiel nach Fig. 2 die unterste Reihe. Mit der nach oben Zunehmenden Reihenzahl verringert sich die Durchflußmenge, was symbolhaft durch schmaler werdende Rechtecke dargestellt ist.

Betätigt ein Benutzer einen bestimmten Kreuzungspunkt in den Spalten und Reihen, wird der darunter liegende Kontakt betätigt. Die in Fig. 1 gezeigte Steuervorrichtung 2 fragt wiederholt und aufeinanderfolgend über eine Abfrageeinheit die einzelnen Kontaktpunkte zeilen- und spaltenweise ab. Die Abfragefrequenz ist so hoch, daß ein Kontaktpunkt während eines Betätigungsvorganges vorzugsweise mehrfach abgefragt wird. Ebenso kann eine Detektiervorrichtung vorgesehen sein, die erkennt, daß zwei Kontaktpunkte gleichzeitig gedrückt wurden und die weiter einen Mittelwert für das Mischungsverhältnis und den Durchfluß aus den verschiedenen Kontaktpunkten bestimmt. Die ermittelten Kontaktpunkte werden entsprechend ihren Informationen in einer Speichereinheit, die Bestandteil der Steuerungsvorrichtung 2 ist, Zwischengespeichert. Die Zwischenspeicherung erfolgt so lange, bis eine neue Eingabe erfolgt. Vorzugsweise sind die Abfrage- und Speichereinheit Bestandteile der Steuervorrichtung 2. Je nach Anwendungsfall können die Abfrage- und Speichereinheit auch als separate Baugruppen ausgebildet sein.

Desweiteren kann eine Verzögerungsvorrichtung vorgesehen sein, die eine sprunghafte Änderung der Eingabe an dem Tastenfeld 1 in eine stetige Änderung an der Ventilmischvorrichtung 6 umsetzt. Durch die Verzögerungsvorrichtung wird vermieden, daß beispielsweise eine Änderung von warm nach kalt sprunghaft erfolgt. Die Zuordnung der einzelnen Kontaktpunkte und symbolhaften Betätigungsstellen erfolgt durch gitterartiges Verschalten der Reihen und Spalten, wobei wie zuvor beschrieben, die Kontaktpunkte unter den Symbolen angeordnet sind.

Eine weitere graphische Darstellung des Tastenfeldes 1 für die Ab- und Zunahme in bezug auf die Temperatur und den Durchfluß ist in Fig. 3 dargestellt. Die geschwärzten Balkenflächen repräsentieren beispielsweise wieder den Warmwasseranteil, während die nichtgeschwärzten Balkenflächen den Kaltwasseranteil kennzeichnen. Nach unten zu nimmt die Durchflußmenge zu. Von links nach rechts verschiebt sich das Mischungsverhältnis von warm zu kalt.

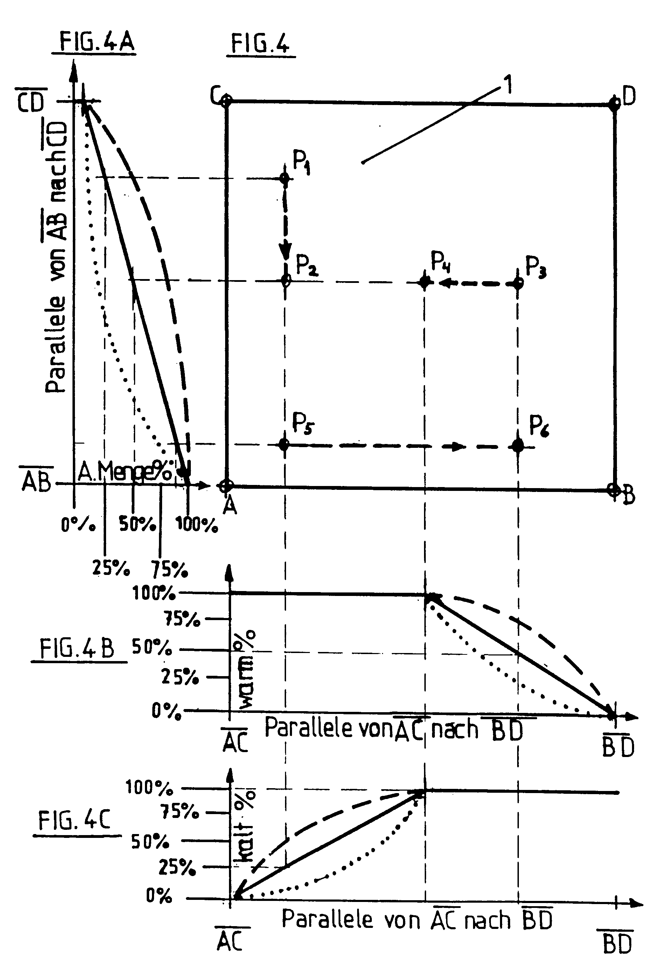

Fig. 4 zeigt eine schematische Darstellung des Tastenfeldes 1, dessen größte Ausmaße durch die Eckpunkte A bis D gekennzeichnet sind. Wird beispielsweise eine vorherige Eingabe von dem Gitterpunkt P1 auf die nachfolgende Eingabe P2 geändert, erfolgt ein 25 %iger Reihensprung, der sich wie in Fig. 4A dargestellt, in einer Zunahme der Durchflußmenge bei gleichbleibendem Mischungsverhältnis auswirkt. Der Übergang von dem Punkt P1 zu dem Punkt P2 (Fig. 4A) erfolgt linear. Fig. 4B und Fig. 4C zeigen reihenbezogen die Kaltwasseranteile (Fig. 4C) und die Warmwasseranteile (Fig. 4B) , die bei Spaltensprüngen von den Eingaben P3 auf P4 bzw. P5 auf P6 vorliegen. Z. B. beinhaltet der Spaltensprung P3 auf P4 eine Temperaturerhöhung durch Veränderung der Anteile von Kalt- und Warmwasser bei einem konstanten mittleren Durchfluß. Dabei verändert sich der auf die Reihe bezogene Warm- und Kaltwasseranteil von P3 (100 % Kaltwasser und 50 % Warmwasser) auf P4 (100 % Kaltwasser und 100 % Warmwasser). Bei einem Spaltensprung von P5 auf P6 erfolgt eine Temperaturabnahme bei konstantem hohen Durchfluß. Dabei verändert sich der auf diese Reihe bezogene Warm- und Kaltwasseranteil von P5 (25 % Kaltwasser und 100 % Warmwasser) auf P6 (100 % Kaltwasser und 50 % Warmwasser).

In den Fig. 4A bis 4C stellen die punktierten und gestrichelten Kurvenabschnitte beispielhaft dar, daß die Änderung der Mischungsanteile und des Durchflusses in anderen Ausführungsbeispielen nicht zwingend linear erfolgen muß.

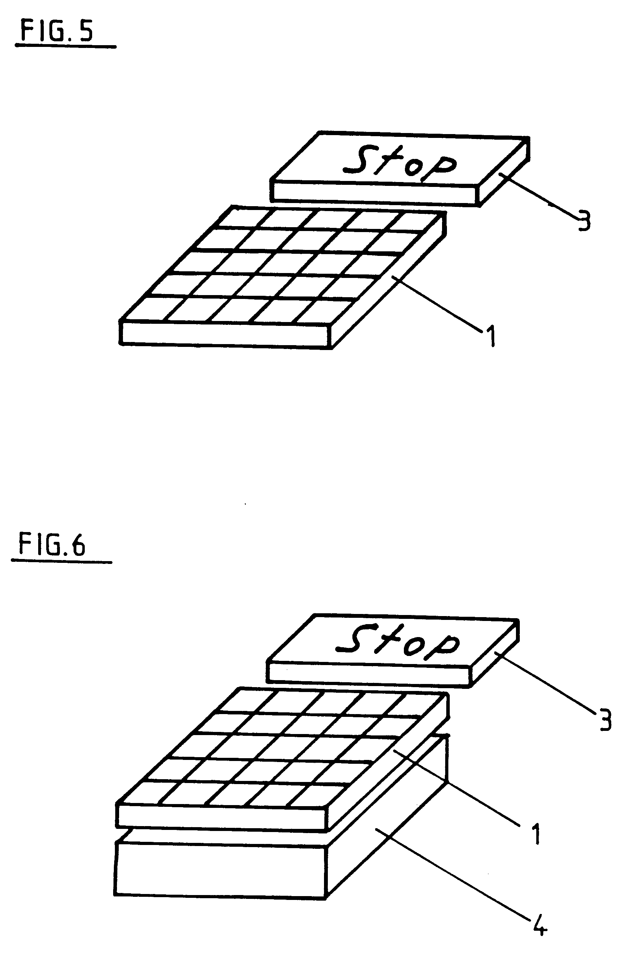

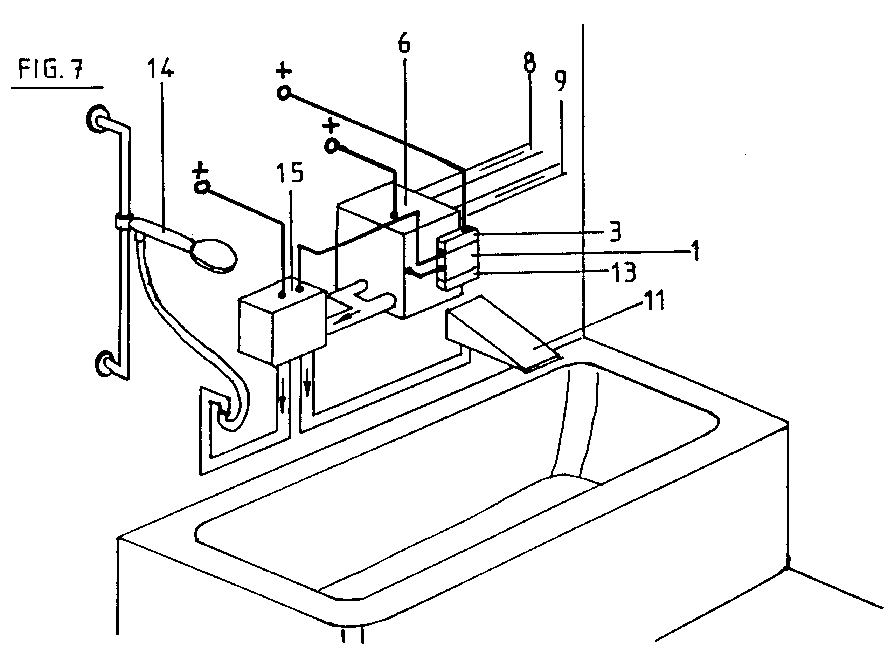

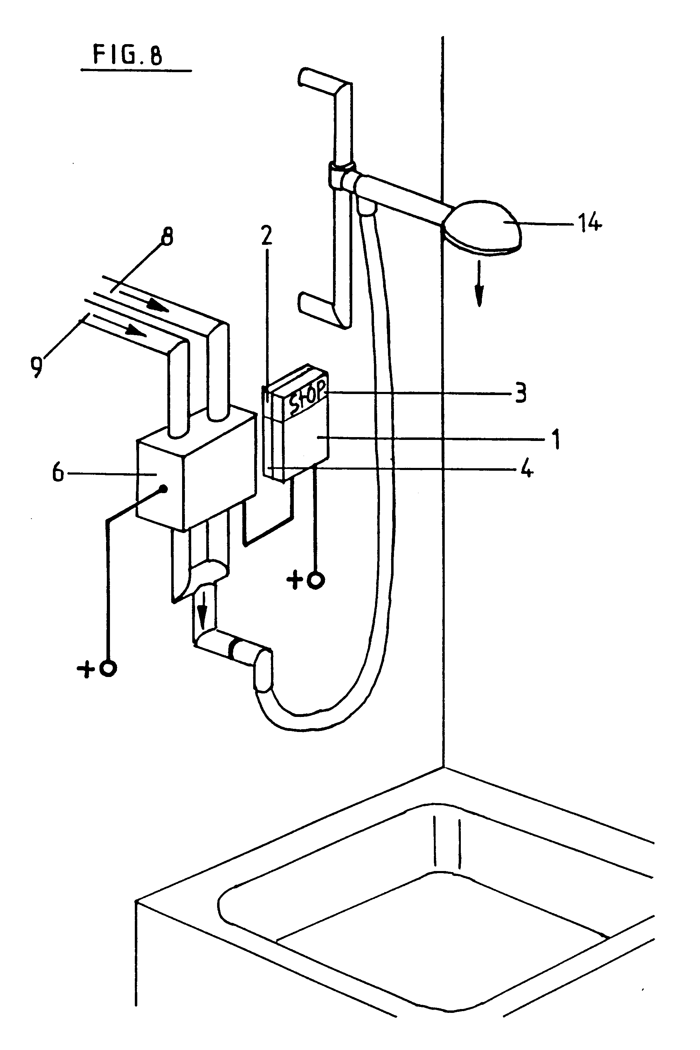

Fig. 5 zeigt ein Tastenfeld 1, dem wie in Fig. 1 eine Stoptaste 3 zugeordnet ist. Ebenso wie durch eine neue Eingabe kann mit der Stoptaste 3 die Speichereinheit auf einen Ausgangswert zurückgestellt und der Durchfluß des flüssigen Mediums unterbrochen werden. Fig. 6 zeigt die um das Anzeigenfeld 4 erweiterte Einheit nach Fig. 5. Das Anzeigenfeld 4 kann unterhalb oder neben dem Tastenfeld 1 angeordnet sein. Ist das Anzeigenfeld 4 unterhalb des Tastenfeldes 1 angeordnet, weist das Anzeigenfeld hier beispielsweise Leuchtdioden auf, die unter den Gitterpunkten des Tastenfeldes 1 angeordnet sind. Vorzugsweise sind genausoviele Leuchtdioden wie Gitterpunkte vorgesehen. Für die Stoptaste kann eine Anzeige bzw. Leuchtdiode aufweisen. Zur Erkennung des Anzeigenfeldes 4 ist das Tastenfeld 1 transparent ausgebildet. Vorzugweise handelt es sich bei dem Tastenfeld 1 um eine Folientastatur, die neben der zuvor beschriebenen optischen Gestaltung auch durch Vertiefungen oder Erhebungen in den Gitterpunkten an der Oberfläche strukturiert sein kann. Damit kann die Mischvorrichtung auch durch blinde Personen betätigt werden.

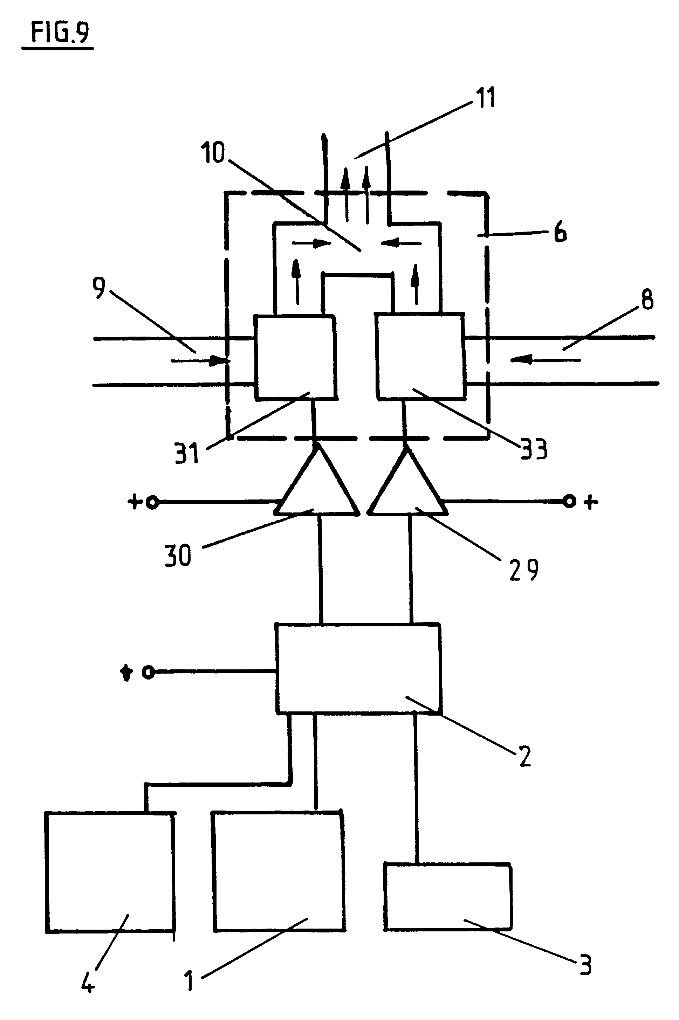

Fig. 7 zeigt eine Anwendung der Mischvorrichtung für eine Badewanne. Abweichend von den zuvor beschriebenen Ausführungsbeispielen ist ein Umschaltventil 15 vorgesehen, das über eine Umschalttaste 13, die im Bereich des Tastenfeldes 1 angeordnet ist, von einer Dusche 14 auf einen Zufluß 11 für die Badewanne umgeschaltet werden kann. Fig. 8 zeigt ein Ausführungsbeispiel für die Anwendung der Mischvorrichtung für eine Dusche. Obwohl in den Fig. 7 und 8 alle Baugruppen dargestellt sind, befinden sich die Mischvorrichtung 6, das Umschaltventil 15 und die Rohrleitungen nicht zugänglich und nicht sichtbar in dem Mauerwerk. Von den dargestellten Teilen ist ausschließlich das Tastenfeld 1, die Stoptaste 3 und die Umschalttaste 13 für die Benutzer zugänglich.

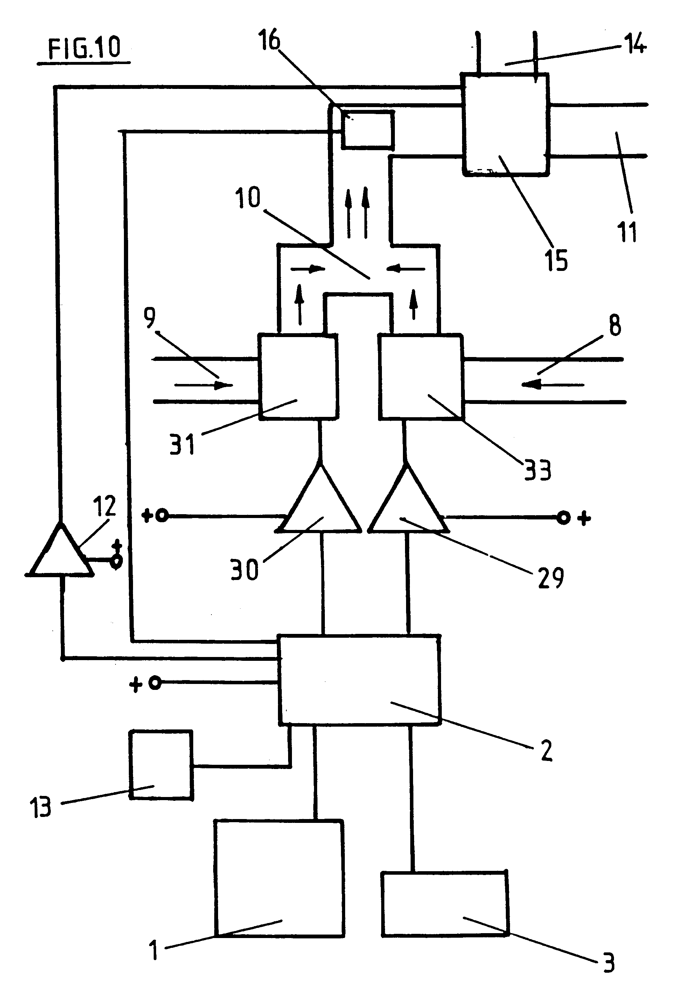

Die Fig. 9 und 10 zeigen Ausführungsbeispiele der Ansteuerung und des Durchflußplanes für das flüssige Medium. Die Steuervorrichtung 2, die beispielsweise ein Mikroprozessor sein kann, bildet mit Ansteuerstufen 29, 30 für die Ventile 31, 33 innerhalb der Ventilmischvorrichtung 6 eine Koppelstufe, die die elektrischen Eingabewerte von dem Tastenfeld 1, der Stoptaste 3 und der Umschalttaste 13 in Steuersignale für die Ventile 31, 33 umsetzt. Wie in Fig. 10 gezeigt, kann in dem Ablaufbereich ein Temperatursensor 16 vorgesehen sein, der mit der Steuervorrichtung 2, die die Abfrageeinheit und Speichereinheit 1 aufweist, zusammenarbeitet. Die Steuervorrichtung 2 ist in Fig. 10 über eine weitere Ansteuerstufe 12 mit dem Umschaltventil 15 verbunden. Abweichend von den zuvor beschriebenen Ausführungsbeispielen können auch mehrere Tastenfelder 1 oder Umschalttasten 13 mit zugehörigen Steuerventilen, weiteren Ausflüssen und Anzeigenfeldern vorgesehen sein.

## Patentansprüche

1. Elektronisch gesteuerte Temperatur- und Durchflußmischvorrichtung für flüssige Medien, insbesondere für den Sanitärbereich, bestehend aus
- einem Tastenfeld mit manuell betätigbaren Kontaktpunkten,
- Zuläufen und einem Abfluß für das Medium,
- Ventilen zum Steuern der Medientemperatur und des Medienflusses und
- einer Steuervorrichtung, die entsprechend den Eingaben des Tastenfeldes die Ventile ansteuert,
**dadurch gekennzeichnet,** daß die Kontaktpunkte des Tastenfeldes (1) so verschaltet sind, daß über jeden einzelnen Kontaktpunkt gleichzeitig die Durchflußmenge und die Temperatur des Mediums steuerbar ist, daß das Tastenfeld (1) ein Anzeigefeld (4) mit Anzeigepunkten aufweist, die die Kontaktgabe der betätigten Kontaktpunkte anzeigen und daß das Anzeigefeld (4) Anzeigepunkte aufweist, die im Betätigungsbereich der Kontaktpunkte angeordnet sind.

2. Mischvorrichtung nach Anspruch 1, dadurch gekennzeichnet, daß die Dauerabgabe des Mediums mittels der Kontaktpunkte einschaltbar ist.

3. Mischvorrichtung nach den Ansprüchen 1 und 2, dadurch gekennzeichnet, daß soviele Anzeigepunkte wie Kontaktpunkte vorgesehen sind.

4. Mischvorrichtung nach den Ansprüchen 1 bis 3, dadurch gekennzeichnet, daß das Tastenfeld (1) transparent und das Anzeigefeld (4) unterhalb des Tastenfeldes (1) angeordnet ist.

5. Mischvorrichtung nach den Ansprüchen 1 bis 4, dadurch gekennzeichnet, daß die Kontakt- und Anzeigepunkte in einer Matrix angeordnet sind.

6. Mischvorrichtung nach den Ansprüchen 1 bis 5, dadurch gekennzeichnet, daß außerhalb des Tastenfeldes (1) eine Stoptaste (3) angeordnet ist, über die der Durchfluß des Mediums abstoppbar ist.

7. Mischvorrichtung nach den Ansprüchen 1 bis 6, dadurch gekennzeichnet, daß außerhalb des Tastenfeldes (1) Umschalttasten (13) vorgesehen sind, die den Ausfluß des Mediums aus verschiedenen Ausflüssen (11, 14) steuern.

8. Mischvorrichtung nach den Ansprüchen 1 bis 7, dadurch gekennzeichnet, daß die Oberfläche des Tastenfeldes (1) mit einer wasserdichten Folie abgedeckt ist, die in den Kontaktpunkten manuell erkennbar und/oder optisch strukturiert ist.

9. Mischvorrichtung nach den Ansprüchen 1 bis 8, dadurch gekennzeichnet, daß eine Detektiervorrichtung vorgesehen ist, die die Kontaktgabe mehrerer Kontaktpunkte detektiert und einen Mittelwert für das Mischungsverhältnis und den Durchfluß des Mediums bestimmt.

## Claims

1. Electronically controlled temperature and flow mixing device for liquid media, in particular for sanitary installations, consisting of
- a keyboard with manually actuatable contact points,
- inlets and an outlet for the medium,
- valves for controlling the media temperature and the media flow and
- a control device which controls the valves according to the inputs of the keyboard,
characterized in that the contact points of the keyboard (1) are so connected that the flow rate and the temperature of the medium is controllable simultaneously via each individual contact point, that the keyboard (1) possesses an indicator board (4) having indicator points, which indicate the making of contact of the actuated contact points, and that the indicator board (4) possesses indicator points which are disposed in the actuating region of the contact points.

2. Mixing device according to Claim 1, characterized in that the continuous output rate of the medium can be switched on by means of the contact points.

3. Mixing device according to Claims 1 and 2, characterized in that the same number of indicator points as contact points is provided.

4. Mixing device according to Claims 1 to 3, characterized in that the keyboard (1) is transparent and the indicator board (4) is disposed underneath the keyboard (1).

5. Mixing device according to Claims 1 to 4, characterized in that the contact and indicator points are disposed in a matrix.

6. Mixing device according to Claims 1 to 5, characterized in that outside the keyboard (1) a stop button (3) is disposed, by which the throughflow of the medium can be stopped.

7. Mixing device according to Claims 1 to 6, characterized in that outside the keyboard (1) change-over keys (13) are provided, which control the outflow of the medium from various outlets (11, 14).

8. Mixing device according to Claims 1 to 7, characterized in that the surface of the keyboard (1) is covered with a water-tight foil, which is manually recognizable and/or optically structured in the contact points.

9. Mixing device according to Claims 1 to 8, characterized in that a detector device is provided, which detects the contacting of a plurality of contact points and determines a mean value for the mixing ratio and the throughflow of the medium.

## Revendications

1. Dispositif mélangeur à commande électronique de la température et de l'écoulement de débit, en particulier dans le domaine sanitaire, comportant
- un clavier avec des points de contact à commande manuelle,
- des conduites d'amenée et une conduite d'écoulement pour le liquide,
- des soupapes pour commander la température et l'écoulement du liquide, et
- un dispositif de commande qui commande les soupapes selon les données entrées sur le clavier caractérisé en ce que les points de contact du clavier sont connectés de telle manière que le débit et la température du liquide peuvent être commandés simultanément par chaque point de contact individuel, en ce que le clavier (1) comporte une zone de visualisation (4) avec points de visualisation qui indiquent la mise en contact des points de contact actionnés et en ce que la zone de visualisation (4) présente des points de visualisation qui sont disposés dans la zone d'actionnement des points de contact.

2. Dispositif mélangeur selon la revendication 1, caractérisé en ce que la distribution continue du liquide peut être mise en circuit au moyen des points de contact.

3. Dispositif mélangeur selon les revendication 1 et 2, caractérisé en ce qu'il y a autant de points de visualisation que de points de contact.

4. Dispositif mélangeur selon les revendications 1 à 3, caractérisé en ce que le clavier (1) est transparent et la zone de visualisation (4) est située au-dessous du clavier (1).

5. Dispositif mélangeur selon les revendications 1 à 4, caractérisé en ce que les points de contact et de visualisation sont disposés dans une matrice.

6. Dispositif mélangeur selon les revendications 1 à 5, caractérisé en ce qu'en dehors du clavier (1) est disposée une touche d'arrêt (3) au moyen de laquelle l'écoulement du liquide peut être stoppé.

7. Dispositif mélangeur selon les revendications 1 à 6, caractérisé en ce qu'en dehors du clavier (1) sont prévues des touches de commutation (13) qui commandent l'écoulement du liquide de différentes sorties (11, 14).

8. Dispositif mélangeur selon les revendications 1 à 7, caractérisé en ce que la surface du clavier (1) est recouverte d'une feuille étanche à l'eau qui permet de percevoir au toucher les points de contact et/ou qui est optiquement structurée.

9. Dispositif mélangeur selon les revendications 1 à 8, caractérisé en ce qu'il est prévu un dispositif de détection qui détecte la mise en contact de plusieurs points de contact et détermine une valeur moyenne pour le rapport de mélange et le débit du liquide.
